(19) Europäisches Patentamt
European Patent Office
Office européen des brevets

(11) **EP 2 984 306 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **14711155.3**

(22) Anmeldetag: **15.03.2014**

(51) Int Cl.:
***F01N 3/20*** *(2006.01)*

(86) Internationale Anmeldenummer:
**PCT/EP2014/000699**

(87) Internationale Veröffentlichungsnummer:
**WO 2014/166575 (16.10.2014 Gazette 2014/42)**

(54) **VERFAHREN ZUM BETREIBEN EINER ABGASREINIGUNGSANLAGE EINES KRAFTFAHRZEUG-VERBRENNUNGSMOTORS**

METHOD FOR OPERATING AN EXHAUST GAS PURIFICATION SYSTEM OF A MOTOR VEHICLE COMBUSTION ENGINE

PROCÉDÉ POUR FAIRE FONCTIONNER UN SYSTÈME D'ÉPURATION DES GAZ D'ÉCHAPPEMENT D'UN MOTEUR A COMBUSTION INTERNE DE VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2013 DE 102013006153**

(43) Veröffentlichungstag der Anmeldung:
**17.02.2016 Patentblatt 2016/07**

(73) Patentinhaber: **Daimler AG**
**70327 Stuttgart (DE)**

(72) Erfinder:
• **HEGEMANN, Rainer**
**71638 Ludwigsburg (DE)**
• **NEUBERGER, Eugen**
**67307 Göllheim (DE)**
• **PAULE, Markus**
**71404 Korb (DE)**
• **WALDBÜSSER, Norbert**
**70374 Stuttgart (DE)**

(74) Vertreter: **JENSEN & SON**
**366-368 Old Street**
**London EC1V 9LT (GB)**

(56) Entgegenhaltungen:
DE-A1-102007 016 478    FR-A1- 2 931 201
US-A1- 2003 051 468    US-A1- 2011 308 233

**Beschreibung**

Die Erfindung betrifft ein Verfahren zum Betreiben einer einen SCR-Katalysator zur selektiven katalytischen Reduktion von Stickoxiden aufweisenden Abgasreinigungsanlage eines Kraftfahrzeug-Verbrennungsmotors nach dem Oberbegriff des Anspruchs 1.

Aus der DE 10 2008 036 884 A1 ist ein Verfahren zum Betreiben einer einen SCR-Katalysator zur selektiven katalytischen Reduktion von Stickoxiden (NOx) aufweisenden Abgasreinigungsanlage bekannt, bei welchem eine Dosierrate für ein Ammoniak enthaltendes Reduktionsmittel zur NOx-Reduktion durch Änderung eines Adaptionsfaktors gegebenenfalls angepasst wird, wenn sich zu starke Abweichungen von durch Modellierung und durch Messung erhaltenen Emissionswerten ergeben. Dabei werden mittels Abgassensoren NOx-Emissionswerte messtechnisch sowohl vor als auch hinter dem SCR-Katalysator erfasst.Aus der DE102007016478 A1 ist ein ähnliches Verfahren mit einer Prüf- und Anpassungsprozedur bekannt. Aufgabe der Erfindung ist es, ein diesbezüglich vereinfachtes Verfahren anzugeben.

Diese Aufgabe wird durch ein Verfahren mit den Merkmalen des Anspruchs 1 gelöst.

Bei dem erfindungsgemäßen Verfahren wird ein Ammoniak ($NH_3$) enthaltendes Reduktionsmittel, insbesondere eine wässrige Harnstofflösung, mit einer vorgebbaren, sich aus einem Basiswert und einem den Basiswert korrigierenden Adaptionsfaktor ergebenden Dosierrate dem Abgas zudosiert. Von Zeit zu Zeit wird eine Prüfprozedur zur Überprüfung und gegebenenfalls Anpassung des Adaptionsfaktors vorgenommen. Bei dieser Prüfprozedur wird ein erster Stickoxidwert des Abgases mit einem zweiten Stickoxidwert des Abgases verglichen, wobei der erste Stickoxidwert und der zweite Stickoxidwert mit ein und demselben, stromab vom SCR-Katalysator angeordneten Stickoxidsensor ermittelt werden. Dabei werden der erste Stickoxidwert bei ausgeschalteter Dosierung des Reduktionsmittels und der zweite Stickoxidwert bei Dosierung des Reduktionsmittels mit einer vorgebbaren Prüf-Dosierrate ermittelt.

Durch die von Zeit zu Zeit vorgenommene Überprüfung des Adaptionsfaktors ist es ermöglicht, durch Alterung oder Drifterscheinungen im Abgassystem erfolgende Änderungen zu erkennen und gegebenenfalls zu korrigieren. Überschreiten die Änderungen ein vorgebbares Maß, so ist vorgesehen, eine Anpassung des Adaptionsfaktors und somit eine Adaptierung der Dosierrate an die veränderten Bedingungen vorzunehmen. Dies ermöglicht eine Kompensation von beispielsweise alterungsbedingten Drifterscheinungen von Systemkomponenten und Ungenauigkeiten, so dass auch über längere Betriebszeiten eine hohe Stickoxid-Reinigungsrate erzielbar ist. Die Dosierrate ergibt sich dabei bevorzugt aus dem Basiswert und dem Adaptionsfaktor durch multiplikative Verknüpfung. Dabei wird der Basiswert bevorzugt durch ein Rechenmodell ermittelt oder wird Kennfeldern entnommen. Bei gleichen vorgegebenen Betriebsbedingungen werden bevorzugt gleiche Basiswerte verwendet. Zeitlich Systemänderungen, welche eine Anpassung der Dosierrate erforderlich machen, um hohe Stickoxidverminderungswerte über einen langen Zeitraum erzielen zu können, werden bevorzugt durch eine Anpassung des Adaptionsfaktors ausgeglichen.

Dadurch, dass zur Erfassung des ersten und des zweiten Stickoxidwerts ein und derselbe Stickoxidsensor herangezogen wird, kann auf einen zweiten, stromauf des SCR-Katalysators eingesetzten Stickoxidsensor verzichtet werden, wodurch sich entsprechende Kostenvorteile für die erfindungsgemäße Abgasreinigungsanlage ergeben. Ein stromaufwärtiger NOx-Sensor wird bei nach dem Stand der Technik bekannten Abgasreinigungsanlagen häufig zur Ermittlung der NOx-Rohemission, d.h. zur Ermittlung der in den SCR-Katalysator mit dem Abgas einströmenden NOx-Menge eingesetzt. Vorliegend wird hierzu der stromabwärtige NOx-Sensor eingesetzt. Dabei wird die Erkenntnis ausgenutzt, dass bei ausgeschalteter Reduktionsmitteldosierung der SCR-Katalysator in Bezug auf seine Stickoxidreduktionsfunktion wirkungslos ist, und aus diesem Grund die ausgangsseitig des SCR-Katalysators mittels des vorzugsweise einzigen in der Abgasreinigungsanlage vorhandenen NOx-Sensors gemessene NOx-Konzentration im Abgas der eingangsseitig vorhandenen NOx-Konzentration im Abgas entspricht. Diese ist bei Abwesenheit von weiteren Abgasreinigungskomponenten, welche eine NOx-Verminderung bewirken können, gleich der NOx-Rohemission des Verbrennungsmotors. Wird anschließend das Reduktionsmittel mit einer vorgebbaren Prüf-Dosierrate dosiert, so kann aus der stromab des SCR-Katalysators gemessenen NOx-Emission unter Verwendung der zuvor bei abgeschalteter Dosierung ermittelten NOx-Rohemission eine der Prüf-Dosierrate entsprechende NOx-Reduktion des SCR-Katalysators ermittelt werden. Weicht diese vom für den entsprechenden Betriebspunkt modellierten Basiswert ab, so wird der Adaptionsfaktor derart angepasst, dass sich rechnerisch mit dem angepassten Adaptionsfaktor die zuvor ermittelten NOx-Reduktion ergibt. Bis zur Vornahme einer weiteren Überprüfung und gegebenenfalls abermaligen Anpassung des Adaptionsfaktors zu einem späteren Zeitpunkt erfolgt dann eine Dosierung des Reduktionsmittels mit einer Dosierrate, welche durch den Basiswert und den angepassten Adaptionsfaktor bestimmt ist.

In Ausgestaltung der Erfindung wird bei einem SCR-Katalysator mit Fähigkeit zur Speicherung von Ammoniak der erste Stickoxidwert bei mit an gespeichertem Ammoniak freien SCR-Katalysator ermittelt. Dadurch wird sichergestellt, dass der erste Stickoxidwert tatsächlich der NOx-Rohemission des Verbrennungsmotors entspricht und nicht etwa durch im SCR-Katalysator gespeicherte Restmengen von Ammoniak, welche eine Verminderung von NOx im SCR-Katalysator bewirken würden, ein von der NOx-Rohemission abweichender Stickoxidwert gemessen wird. Zur Befreiung des SCR-Katalysators von gespeichertem Reduktionsmittel ist es vorzugsweise vorgesehen, den SCR-Katalysator bei abgeschalteter Dosierung eine vorgebbare Zeitspanne zu betreiben und erst nach Ablauf dieser Zeitspanne den ersten Stickoxidwert zu ermitteln.

In weiterer Ausgestaltung der Erfindung wird die Prüfprozedur im Anschluss an eine thermische Regeneration eines der Abgasreinigungsanlage zugeordneten Partikelfilters vorgenommen. Da eine thermische Regeneration des Partikelfilters bei erhöhter Abgastemperatur von etwa 550 °C oder mehr erfolgt, weist der SCR-Katalysator im Anschluss an die Partikelfilterregeneration eine erhöhte Temperatur und deshalb eine allenfalls geringe Menge an gespeichertem Ammoniak auf. Ein Befreien des SCR-Katalysators von gespeichertem Ammoniak bei Durchführen der Prüfprozedur kann daher kurz ausfallen oder sogar ganz entfallen.

In weiterer Ausgestaltung der Erfindung wird der Basiswert durch ein Rechenmodell ermittelt, welches auf ein geschätztes betriebspunktabhängiges Stickoxid-Umsatzvermögen des SCR-Katalysators und auf eine geschätzte betriebspunktabhängige NOx-Rohemission des Verbrennungsmotors zurückgreift. Zur Schätzung des betriebspunktabhängigen Stickoxid-Umsatzvermögen des SCR-Katalysators werden dabei bevorzugt das Umsatzvermögen des SCR-Katalysators beeinflussende Abgas-Betriebsparameter wie Abgastemperatur, Abgasdurchsatz und Emissionswerte rechnerisch und/oder sensorisch ermittelt und ein dementsprechendes Umsatzvermögen rechnerisch ermittelt oder vorab gespeicherten Kennlinien entnommen. Die NOx-Rohemission des Verbrennungsmotors wird bevorzugt anhand eines rechnerischen NOx-Rohemissionsmodells und aus vorab gespeicherten Kennlinien in Abhängigkeit von Motorlast und Motordrehzahl sowie gegebenenfalls weiteren Einflussgrößen ermittelt. Auf die Verwendung eines stromauf vom SCR-Katalysator angeordneten Stickoxid-Sensor wird vorzugsweise verzichtet.

In weiterer Ausgestaltung der Erfindung wird bei Ermittlung des zweiten Stickoxidwerts eine einem vorgebbaren NOx-Sollumsatz entsprechende Prüf-Dosierrate eingestellt. Die Prüf-Dosierrate wird bevorzugt so eingestellt, dass sich rechnerisch eine unterhalb dem maximal möglichen Wert liegende NOx-Reduktion des SCR-Katalysators ergibt. Auf diese Weise wird eine unbeabsichtigte Überdosierung vermieden, welche zu einem Ammoniak-schlupf und einer fehlerhaften Messung des zweiten Stickoxidwerts führen könnte. Insbesondere ist es in weiterer Ausgestaltung des erfindungsgemäßen Verfahrens vorgesehen, dass eine Prüf-Dosierrate eingestellt wird, welche einem rechnerischen NOx-Sollumsatz des SCR-Katalysators im Bereich von 20 % bis 80 %, besonders bevorzugt im Bereich von 40 % bis 70 %, entspricht.

In weiterer Ausgestaltung der Erfindung wird die Prüfprozedur bei stationären oder quasistationären Bedingungen vorgenommen. Darunter sind vorliegend Bedingungen zu verstehen, bei denen im Wesentlichen konstante oder allenfalls geringe Schwankungen von Werten für Abgastemperatur und NOx-Rohemission vorhanden sind. Dadurch ist sichergestellt, dass eine aus dem ersten und dem zweiten Stickoxidwert errechnete Umsatzrate des SCR-Katalysators eindeutig einem bestimmten Betriebszustand zugeordnet werden kann. Ändern sich die Betriebsbedingungen während der Prüfprozedur über ein vorgebbares Maß hinaus, so ist vorzugsweise vorgesehen, die Prüfprozedur abzubrechen und zu einem späteren Zeitpunkt erneut zu starten.

In weiterer Ausgestaltung der Erfindung ist vorgesehen, dass der erste und/oder der zweite Stickoxidwert durch Integration eines vom Stickoxidsensor bereitgestellten Sensorsignals erhalten werden. Dadurch wird eine verbesserte Genauigkeit und Zuverlässigkeit bei der Ermittlung des ersten und des zweiten Stickoxidwerts erreicht. Die Integration der Werte erfolgt bevorzugt über einen vorgebbaren Zeitraum.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination, sondern auch in anderen Kombinationen oder in der Alleinstellung verwendbar, ohne den Rahmen der Erfindung zu verlassen.

Dabei zeigen:

Fig. 1     ein schematisches Blockbild einer an einen Kraftfahrzeug-Verbrennungsmotor angeschlossenen Abgasreinigungsanlage und

Fig. 2     ein Diagramm in welchem schematisch einen rechnerischer NOx-Sollumsatz in Abhängigkeit von einer Reduktionsmitteldosierrate dargestellt ist.

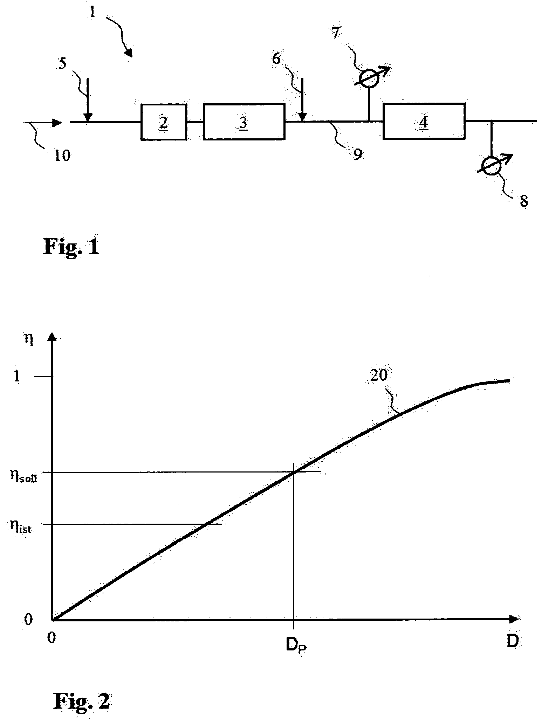

In Fig. 1 ist lediglich grob schematisch eine Abgasreinigungsanlage 1 eines Kraftfahrzeug-Verbrennungsmotors, insbesondere eines Dieselmotors dargestellt. Abgas des nicht dargestellten Verbrennungsmotors tritt entsprechend der mit dem Pfeil 10 gekennzeichneten Richtung in die Abgasreinigungsanlage 1 ein. Diese weist in Abgasströmungsrichtung gesehen hintereinander einen Oxidationskatalysator 2, einen Partikelfilter 3 und einen SCR-Katalysator 4 in einer Abgasleitung 9 auf. Der SCR-Katalysator 4 kann auch als zweiflutige Katalysatoranordnung von zwei parallel geschalteten Katalysatoreinheiten ausgebildet sein.

Die Abgasreinigungsanlage 1 weist ferner eine Brennstoff-Zugabeeinrichtung 5 stromauf des Oxidationskatalysators 2 auf. Über die Brennstoff-Zugabeeinrichtung 5 kann ein kohlenwasserstoff- und/oder wasserstoffhaltiger Brennstoff in die Abgasleitung 9 eingebracht werden. Vorzugsweise ist die Brennstoff-Zugabeeinrichtung 5 dazu vorgesehen, einen an Bord des Fahrzeugs vorhandenen, insbesondere zu dessen Antrieb vorgesehenen Kraftstoff dem Abgas zuzuführen.

Über eine Reduktionsmittel-Zugabeeinrichtung 6 kann dem Abgas ein $NH_3$ in freier oder gebundener Form aufweisendes Reduktionsmittel zur selektiven katalytischen NOx-Reduktion zugeführt werden. Ohne Einschränkung der Allgemeinheit wird nachfolgend davon ausgegangen, dass es sich bei dem Reduktionsmittel um eine wässrige Harnstofflösung (HWL) handelt. Die HWL weist bevorzugt eine Harnstoff-Sollkonzentration von etwa 32 % auf und wird einem nicht dargestellten Vorratsbehälter entnommen.

Weiterhin ist ein in Bezug auf NOx empfindlicher Sensor 8 stromab des SCR-Katalysators 4 vorgesehen. Eingangsseitig des SCR-Katalysators 4 ist ein Temperaturfühler 7 zur Erfassung der Abgastemperatur bzw. der Temperatur des SCR-Katalysators 4 vorgesehen. Eine Anordnung stromab des SCR-Katalysators 4 kann ebenfalls vorgesehen sein. Durch Auswertung des vom NOx-Sensor 8 abgegebenen Signals kann, wie nachfolgend näher erläutert, der NOx-Umsatz des SCR-Katalysators 4 ermittelt werden. Hierfür ist vorzugsweise ein nicht dargestelltes Steuergerät vorgesehen, welches die Signale der Sensoren 7, 8, sowie Signale weiterer, nicht näher dargestellte Sensoren empfängt und verarbeiten kann. Das Steuergerät kann bevorzugt außerdem den Betrieb der Zugabeeinrichtungen 5, 6 steuern und weitere Steuerungs- und Auswertefunktionen betreffend den Betrieb des Verbrennungsmotors und der Abgasreinigungsanlage 1 ausführen.

Es versteht sich, dass die Abgasreinigungsanlage 1 weitere hier nicht gesondert dargestellte, der Abgasreinigung dienende katalytische oder filterwirksame Komponenten aufweisen kann. Insbesondere kann ein Ammoniak-Sperrkatalysator zur Oxidation von $NH_3$-Schlupf hinter dem SCR-Katalysator 4 vorgesehen sein. Weiterhin sind vorzugsweise zusätzliche, nicht dargestellte Abgas-, Druck- und Temperatursensoren vorgesehen, über deren Signale der Betrieb der Abgasreinigungsanlage 1 und des Verbrennungsmotors bedarfsgerecht eingestellt werden können. Temperatursensoren sind bevorzugt jeweils vor und hinter dem Oxidationskatalysator 2 und/oder dem Partikelfilter 3 und/oder dem SCR-Katalysator 4 vorgesehen.

Der Oxidationskatalysator 2 ist bevorzugt als so genannter Diesel-Oxidationskatalysator mit einer Beschichtung mit einer geringer oder fehlender Sauerstoffspeicherfähigkeit ausgebildet. Es kann auch eine Beschichtung mit einer Drei-Wege-Katalysator-Funktion vorgesehen sein. Ein Träger für die Beschichtung ist vorzugsweise als Keramikträger oder als Metallfolien-Trägerkörper ausgebildet. Es kann zudem ein unmittelbar vorgeschaltetes Heizelement, bevorzugt als beschichteter Metallfolien-Trägerkörper (so genannter E-Kat) ausgebildet, vorgesehen sein.

Der Partikelfilter 3 kann in Sintermetallausführung oder als wanddurchströmte Filtereinheit in Wabenkörperbauweise ausgebildet sein. Vorzugsweise ist für den Partikelfilter 3 eine katalytische Beschichtung, beispielsweise mit einem oxidationskatalytisch wirksamen Material und/oder mit einem SCR-Katalysatormaterial vorgesehen. In dem letztgenannten Fall ist die Reduktionsmittel-Zugabevorrichtung 6 vorzugsweise zwischen dem Oxidationskatalysator 3 und dem Partikelfilter 3 angeordnet. Das SCR-Katalysatormaterial kann unter oxidierenden Bedingungen eine selektive, kontinuierliche Reduktion von NOx mittels eingespeichertem und/oder zugeführtem Ammoniak ($NH_3$) als selektivem NOx-Reduktionsmittel katalysieren. Bevorzugt als Katalysatormaterial ist ein Eisen oder Kupfer enthaltender Zeolith. Das SCR-Katalysatormaterial kann dabei auf der Rohgasseite und/oder auf der Reingasseite der filterwirksamen Flächen des Partikelfilters 3 vorgesehen sein. Bei der bevorzugten Ausführung des Partikelfilters 3 als üblicher wanddurchströmter Filter in Wabenkörperbauweise ist eine gegebenenfalls vorhandene Beschichtung mit dem entsprechenden SCR-Katalysatormaterial bevorzugt auf den rohgasexponierten Kanalwänden vorgesehen. Insbesondere in diesem Fall kann es vorteilhaft sein, die SCR-Katalysatorbeschichtung lediglich abschnittsweise eintrittsseitig oder austrittsseitig auf Kanalwänden des Partikelfilters 3 vorzusehen. Beispielsweise kann über einen ersten Teil der axialen Ausdehnung des Partikelfilters 3 von etwa 50 % der Länge eine Beschichtung mit dem SCR-Katalysatormaterial vorgesehen sein. Der in axialer Richtung gesehen hintere Teil kann unbeschichtet oder mit einer oxidationskatalytisch wirksamen Beschichtung versehen sein.

Der stromab des Partikelfilters 3 angeordnete SCR-Katalysator 4 ist analog zu einer gegebenenfalls vorhandenen SCR-Beschichtung des Partikelfilters 3 zur selektiven Reduktion von NOx mit $NH_3$ befähigt und bezüglich einer solchen Beschichtung bevorzugt gleichartig ausgebildet. Es können auch zwei in Abgasströmungsrichtung hintereinander angeordnete, unterschiedliche SCR-Beschichtungen mit unterschiedlichem Temperaturbereich für maximale Wirksamkeit auf ein und demselben Trägerkörper oder auf zwei mit kurzem Abstand hintereinander angeordneten Trägerkörpern vorgesehen sein. Bevorzugt sind gezonte Beschichtungen umfassend einen Eisen und einen Kupfer enthaltenden Zeolith. Vorzugsweise ist der SCR-Katalysator 4 motorfern im Unterbodenbereich des Fahrzeugs angeordnet. Besonders bevorzugt ist jedenfalls eine Anordnung im Abgasstrang 9 derart, dass bei einer thermischen Partikelfilterregeneration die Temperatur des SCR-Katalysators 4 nicht über 650 °C ansteigt. Durch geometrische Entfernung vom Partikelfilter 3 in Verbindung mit einer entsprechenden Dimensionierung der Abgasleitung 9 in Bezug auf Wärmeabgabe kann erreicht werden, dass zwischen einem auf etwa 800 °C aufgeheizten Partikelfilters 3 und dem SCR-Katalysator 4 ein Temperaturgefälle von mehr als 200 °C oder mehr besteht.

Zur Durchführung einer thermischen Regeneration des Partikelfilters 3 durch Rußabbrand wird die Brennstoff-Zugabeeinrichtung 5 aktiviert und Brennstoff, insbesondere Dieselkraftstoff dem Abgas zugegeben. Durch Oxidation des Brennstoffs am Oxidationskatalysator 2 wird das dem Partikelfilter 3 zugeführte Abgas und der Partikelfilter 3 auf eine für einen Rußabbrand erforderliche Temperatur von etwa 600 °C bis 850 °C aufgeheizt. Meist ist für die gesamte Dauer der thermischen Partikelfilterregeneration eine Brennstoffzufuhr, gegebenenfalls mit Unterbrechungen erforderlich, um die Temperatur des Partikelfilters 3 auf der für einen Rußabbrand erforderlichen Temperatur zu halten.

Nachfolgend wird das erfindungsgemäße Verfahren zum Betreiben des SCR-Katalysators 4 näher erläutert.

Im normalen Betriebszustand der Abgasreinigungsanlage 1 und des Verbrennungsmotors errechnet das Steuergerät eine Dosierrate für das über die Reduktionsmittel-Zugabeeinrichtung 6 dem Abgas zudosierte Reduktionsmittel. Dabei ergibt sich vorliegend die Dosierrate aus einem Basiswert und einem den Basiswert korrigierenden Adaptionsfaktor. Der Basiswert für die Dosierrate wird dabei aus Betriebszustandsgrößen des Abgases wie Temperatur, Durchsatz, NOx-Gehalt, Verhältnis von Stickstoffdioxid zu Stickstoffmonoxid, Sauerstoffgehalt und gegebenenfalls weiteren Größen sowie aus Betriebszustandsgrößen des SCR-Katalysators 4 wie Temperatur, Menge des gespeicherten Ammoniaks, Wirkungsgrad der NOx-Reduktion und gegebenenfalls weiterer Größen mittels eines Rechenmodells und/oder aus vorab gespeicherten Kennlinien derart errechnet, dass ein vorgebbarer, möglichst hoher, zumindest jedoch ein den Anforderungen entsprechender Soll-NOx-Umsatz durch den SCR-Katalysator 4 resultiert. Die Reduktionsmittel-Zugabeeinrichtung 6 wird vom Steuergerät dabei zur Abgabe der fortlaufend berechneten Dosierrate mit einem entsprechenden Steuersignal angesteuert.

Obschon damit im Allgemeinen eine hohe Stickoxidverminderung durch den SCR-Katalysator 4 erzielt werden kann, können durch Drifterscheinungen und Toleranzen von Systemkomponenten unerwünschte Abweichungen des tatsächlich vorhanden NOx-Umsatzes vom angestrebten Soll-Umsatz oder mit einem Ammoniak-Schlupf verbundene Überdosierungen auftreten. Um diese zu vermeiden bzw. wenigstens zu minimieren, ist von Zeit zu Zeit die Durchführung einer Prüfprozedur vorgesehen, bei welcher der Adaptionsfaktor überprüft wird. Hierbei wird, wie nachfolgend erläutert, der NOx-Umsatz des SCR-Katalysators 4 mittels des NOx-Sensors 8 messtechnisch ermittelt. Weicht der ermittelte NOx-Umsatz vom Soll-Umsatz um mehr als ein vorgebbares Maß ab, so wird der Adaptionsfaktor derart geändert, dass sich rechnerisch zusammen mit dem Basiswert eine geänderte Dosierrate ergibt, mit welcher der Soll-Umsatz erzielt werden kann.

Die Prüfprozedur kann immer dann vorgenommen werden, wenn vorgebbare Freigabebedingungen hierfür erfüllt sind. Hierzu zählt insbesondere das Vorliegen eine stationären oder quasistationären Betriebszustands in Bezug auf Temperatur des Abgases bzw. des SCR-Katalysators sowie der NOx-Rohemission des Verbrennungsmotors und des zu erwartenden Verhältnisses von Stickstoffdioxid und Stickstoffmonoxid im Abgas eingangsseitig des SCR-Katalysators 4. Speziell kann das Vorliegen einer wenigstens annähernd konstanten Temperatur des SCR-Katalysators abgefragt bzw. gefordert werden. Bevorzugt ist dabei eine Temperatur im Bereich zwischen 300 °C und 350 °C. Besonders bevorzugt ist es, die Prüfprozedur im Anschluss an eine durchgeführte thermische Regeneration des Partikelfilters 3 anzufordern. In diesem Fall ist eine hohe Wahrscheinlichkeit dafür gegeben, dass der SCR-Katalysator 4 eine Temperatur in dem genannten Bereich aufweist. Die Prüfprozedur kann jedoch auch angefordert werden, wenn der NOx-Sensor 8 Signalwerte liefert, welche außerhalb eines Wertebereichs liegen, welches aufgrund der errechneten Dosierrate bzw. des aufgrund der Dosierrate errechneten NOx-Umsatzes zu erwarten ist.

Liegen die Freigabebedingungen zur Durchführung der Prüfprozedur vor, so wird in einer ersten Phase die Dosierung des Reduktionsmittels über die Reduktionsmittel-Zugabeeinrichtung 6 vorübergehend abgeschaltet. Die Abschaltphase wird so lange aufrechterhalten, bis eine durch das Berechnungsmodell berechnete Entleerzeit zum Befreien des SCR-Katalysators 4 von gespeichertem Ammoniak verstrichen ist.

In einer auf die Entleerphase als erster Phase der Prüfprozedur folgenden zweiten Phase wird bei weiterhin abgeschalteter Dosierung des Reduktionsmittels ein erster Stickoxidwert durch den Stickoxidsensor 8 erfasst. Der erste Stickoxidwert stellt bevorzugt eine durch Integration von Sensorsignalwerten über einen vorgebbaren oder vorgegebenen Zeitraum von etwa 30 Sekunden bis 3 Minuten ermittelte massebezogene NOx-Menge dar. Hierzu werden bevorzugt vom Stickoxidsensor 8 als Rohwerte gelieferte NOx-Konzentrationswerte unter Berücksichtigung des aufgrund des aktuellen Motorbetriebszustands bekannten Abgasmassenstroms in die massebezogene NOx-Menge umgerechnet. Da der SCR-Katalysator 4 aufgrund seines von gespeichertem Ammoniak befreiten Zustands und der abgeschalteten Reduktionsmitteldosierung in Bezug auf eine Stickoxidreduktion inaktiv ist, entspricht diese NOx-Menge der in dem Integrationszeitraum vom Verbrennungsmotor emittierten NOx-Rohemissionsmenge.

In einer auf die zweite Phase der Prüfprozedur folgenden dritten Phase wird die Reduktionsmittel-Zugabeeinrichtung 6 zur Abgabe einer Prüf-Dosierrate für das Reduktionsmittel angesteuert, bei welcher der SCR-Katalysator 4 gemäß des Rechenmodells bei den vorhandenen Betriebsbedingungen einen vorbestimmten NOx-Sollumsatz bewirkt. Vorzugsweise wird eine Prüf-Dosierrate eingestellt, welche einen vorbestimmten NOx-Sollumsatz im Bereich von 40 % bis 70 % bewirkt. Dabei wird durch den Stickoxidsensor analog zur zweiten Phase ein zweiter Stickoxidwert erfasst. Aus diesem ebenfalls durch Integration über einen etwa gleichen Zeitraum wie bei der ersten Phase ermittelten massebezogenen zweiten Stickoxidwert sowie dem ersten Stickoxidwert wird ein NOx-Istumsatz errechnet. Dabei können, insbesondere wenn bei der Ermittlung des ersten und des zweiten Stickoxidwerts unterschiedliche Integrationsdauern vorlagen, diese Werte als zeitbezogene Werte eingesetzt werden.

Durch Quotientenbildung wird aus dem NOx-Sollumsatz und dem ermittelten NOx-Istumsatz ein Adaptionsfaktor ermittelt, mit welchem in auf die damit beendete Prüfprozedur folgenden Betriebsphasen der rechnerische Basiswert für die Dosierrate multipliziert wird.

Nachfolgend wird die dargestellte bevorzugte Vorgehensweise nochmals anhand eines Zahlenbeispiels erläutert. Hierzu wird auf eine in Fig. 2 dargestellte Kennlinie Bezug genommen, welche einen rechnerischen NOx-Sollumsatz $\eta$ in Abhängigkeit von einer Dosierrate D für die bei der Prüfprozedur vorhanden Betriebsbedingungen darstellt. Vorliegend wird davon ausgegangen, dass die Kennlinie zumindest in Abhängigkeit von der NOx-Rohemission des Verbrennungsmotors, dem Abgasdurchsatz, der Temperatur des SCR-Katalysators 4 sowie dem Verhältnis von Stickstoffdioxid und Stickstoffmonoxid im Abgas vom Rechenmodell erzeugt oder vorgegeben wird. Die im Diagramm von Fig. 2 skizzierte Kennlinie 20 kann dabei den NOx-Sollumsatz $\eta$ in Abhängigkeit vom Basiswert für die Dosierrate D oder auch vom durch einen aktuell gültigen Adaptionsfaktor korrigierten Basiswert darstellen.

Sind bei vorliegender Anforderung der Prüfprozedur die Freigabebedingungen erfüllt und der SCR-Katalysator 4 von gespeichertem Ammoniak befreit, so wird zur Ermittlung der NOx-Rohemission des Verbrennungsmotors das Signal des Stickoxidsensors 8 über eine vorgebbare erste Zeitdauer hinweg erfasst und ein integraler massebezogener erster Stickoxidwert errechnet. Beispielhaft wird vorliegend davon ausgegangen, dass dieser erste Stickoxidwert 250 mg NOx entspricht. Dieser Wert stellt einen bevorzugten Wert für die Festlegung der ersten Zeitdauer dar und wird bei der weiteren Berechnung als in der ersten Zeitdauer vom Verbrennungsmotor emittierte NOx-Rohemission betrachtet.

Damit ist die zweite Phase der NOx-Rohemissionsermittlung der Prüfprozedur beendet und es wird für die Durchführung der dritten Phase eine Prüf-Dosierrate $D_P$ für das Reduktionsmittel entsprechend der in Fig. 2 dargestellten Kennlinie 20 eingestellt. Vorliegend wird beispielhaft davon ausgegangen, dass die Prüf-Dosierrate $D_P$ so gewählt ist, dass durch den SCR-Katalysator 4 ein rechnerischer NOx-Sollumsatz $\eta_{soll}$ von 60 % bewirkt wird. Dabei wird außerdem davon ausgegangen, dass Bedingungen vorliegen, bei denen für den Umsatz einer Masseeinheit NOx etwa 0,35 bis 0,4 Masseeinheiten Ammoniak ($NH_3$) erforderlich sind Der so genannte Stöchiometriefaktor liegt also zwischen 0,35 und 0,4.

Dies stellt einen für die Durchführung der Prüfprozedur bevorzugten Bereich dar, welcher sich aus den aktuellen Betriebsbedingungen, insbesondere aus dem Verhältnis von Stickstoffdioxid und Stickstoffmonoxid sowie der Temperatur im Abgas ergibt.

Vorliegend wird beispielhaft davon ausgegangen, dass der Stöchiometriefaktor 0,37 beträgt. Somit ist zur Erzielung des NOx-Sollumsatz $\eta_{soll}$ von 60 % der in einer Zeit entsprechend der ersten Zeitdauer vom Verbrennungsmotor emittierten Stickoxide eine $NH_3$-Menge von

$$m_{NH3} = 250mg * 0,6 * 0,37 = 55,5 \ mg$$

erforderlich.

Dementsprechend steuert in der dritten Phase der Prüfprozedur das Steuergerät die Reduktionsmittel-Zugabeeinrichtung 6 zur Abgabe einer Prüf-Dosierrate $D_P$ des Reduktionsmittels an, welche einer Ammoniakmenge $m_{NH3}$ von 55,5 bezogen auf die erste Zeitdauer entspricht. Falls von einer Kennlinie 20 ausgegangen wird, welche einen NOx-Sollumsatz $\eta_{soll}$ in Abhängigkeit von einem bereits um einen aktuellen Adaptionsfaktor korrigierten Basiswert für die Dosierrate $D_P$ wiedergibt, so ist vorliegend vorgesehen, Reduktionsmitteldosierung einzustellen, welche einer um den aktuellen Adaptionsfaktor korrigierten, zeitbezogenen Ammoniakmenge $m_{NH3}$ entspricht.

Nach einer gegebenenfalls vorgesehenen Wartezeit zur Stabilisierung einer Ammoniakspeichermenge im SCR-Katalysator 4 wird das Signal des Stickoxidsensors 8 über eine vorgebbare zweite Zeitdauer hinweg erfasst und ein integraler massebezogener zweiter Stickoxidwert errechnet. Die zweite Zeitdauer entspricht vorzugsweise wenigstens annähernd der ersten Zeitdauer. Sie kann jedoch auch abweichend von der ersten Zeitdauer gewählt werden. In diesem Fall wird der massebezogene zweite Stickoxidwert auf die erste Zeitdauer bezogen. Jedenfalls stellt der zweite Stickoxidwert eine Stickoxidemission dar, welche um einen NOx-Istumsatz $\eta_{ist}$ aufgrund der Prüf-Dosierrate $D_P$ gegenüber der Stickoxidrohemission, d.h. gegenüber dem ersten Stickoxidwert vermindert ist.

Wird vorliegend lediglich beispielhaft davon ausgegangen, dass der zweite Stickoxidwert einer auf die erste Zeitdauer bezogenen NOx-Masse von 100 mg entspricht, so ist dies gleichbedeutend mit einem NOx-Istumsatz $\eta_{ist}$ von lediglich 40 % der NOx-Rohemission von 250 mg. Somit bleibt der mittels des NOx-Sensors 8 ermittelte NOX-Istumsatz $\eta_{ist}$ um den Faktor 1,5 unter dem berechneten NOx-Sollumsatz $\eta_{soll}$ von 60 %. Dementsprechend werden für den weiteren Betrieb die rechnerischen Basiswerte für die Reduktionsmitteldosierung um den Adaptionsfaktor 1,5 erhöht. Alternativ hierzu wird der vor der Prüfprozedur gültige Adaptionsfaktor um den Faktor 1,5 zu einem neuen Adaptionsfaktor erhöht. Im Anschluss an die Prüfprozedur eingestellte Dosierraten D, welche sich aus dem rechnerischen Basiswert und dem angepassten Adaptionsfaktor ergeben, führen daher mit hoher Zuverlässigkeit zu einem NOx-Istumsatz $\eta_{ist}$, welcher nicht oder allenfalls geringfügig vom angestrebten NOx-Sollumsatz $\eta_{soll}$ abweicht.

Sollte sich bei der Prüfprozedur ein Adaptionsfaktor ergeben, welcher um mehr als ein vorgebbares Maß von eins unterscheidet, so kann vorgesehen sein, eine dementsprechende Fehlermeldung auszugeben. In einem solchen Fall wird von einem nicht mehr adaptionsfähigen Dosiersystem ausgegangen, bei welchem eine der Systemkomponenten eine nicht mehr sinnvoll korrigierbare Fehlfunktion aufweist. Bevorzugt ist es in einem solchen Fall auch, wenn sich an die vorstehend beschriebene Prüfprozedur Überprüfungsroutinen anschließen, mit welchen Systemkomponenten, wie beispielsweise eine Reduktionsmittelfördereinheit, die Reduktionsmittel-Zugabeeinrichtung 6, oder weitere Komponenten gezielt einer Funktionsprüfung unterzogen werden.

**Patentansprüche**

1. Verfahren zum Betreiben einer einen SCR-Katalysator zur selektiven katalytischen Reduktion von Stickoxiden aufweisenden Abgasreinigungsanlage (1) eines Kraftfahrzeug-Verbrennungsmotors, bei welchem ein Ammoniak enthaltendes Reduktionsmittel mit einer vorgebbaren, sich aus einem Basiswert und einem den Basiswert korrigierenden Adaptionsfaktor ergebenden Dosierrate (D) dem Abgas zudosiert wird, wobei von Zeit zu Zeit eine Prüfprozedur zur Überprüfung und gegebenenfalls Anpassung des Adaptionsfaktors vorgenommen wird, **dadurch gekennzeichnet, dass** bei der Prüfprozedur ein erster Stickoxidwert des Abgases mit einem zweiten Stickoxidwert des Abgases verglichen wird, wobei der erste Stickoxidwert und der zweite Stickoxidwert mit ein und demselben, stromab vom SCR-Katalysator (4) angeordneten Stickoxidsensor (8) ermittelt werden, wobei der erste Stickoxidwert bei ausgeschalteter Dosierung des Reduktionsmittels und der zweite Stickoxidwert bei Dosierung des Reduktionsmittels mit einer vorgebbaren Prüf-Dosierrate ($D_P$) ermittelt werden.

2. Verfahren nach Anspruch 1, **dadurch gekennzeichnet, dass** bei einem SCR-Katalysator (4) mit Fähigkeit zur Speicherung von Ammoniak der erste Stickoxidwert bei mit an gespeichertem Ammoniak freien SCR-Katalysator (4) ermittelt wird.

3. Verfahren nach Anspruch 1 oder 2, **dadurch gekennzeichnet, dass** die Prüfprozedur im Anschluss an eine thermische Regeneration eines der Abgasreinigungsanlage zugeordneten Partikelfilters (3) vorgenommen wird.

4. Verfahren nach einem der Ansprüche 1 bis 3, **dadurch gekennzeichnet, dass** der Basiswert durch ein Rechenmodell ermittelt wird, welches auf ein geschätztes betriebspunktabhängiges Stickoxid-Umsatzvermögen des SCR-Katalysators und auf eine geschätzte betriebspunktabhängige Stickoxid-Rohemission des Verbrennungsmotors zurückgreift.

5. Verfahren nach einem der Ansprüche 1 bis 4, **dadurch gekennzeichnet, dass** bei Ermittlung des zweiten Stickoxidwerts eine einem vorgebbaren NOx-Sollumsatz ($\eta_{soll}$) entsprechende Prüf-Dosierrate ($D_P$) eingestellt wird.

6. Verfahren nach Anspruch 5, **dadurch gekennzeichnet, dass** der NOx-Sollumsatz ($\eta_{soll}$) im Bereich von 20 % und 80 % des dem SCR-Katalysator (4) zugeführten Stickoxid vorgegeben wird.

7. Verfahren nach einem der Ansprüche 1 bis 6, **dadurch gekennzeichnet, dass** die Prüfprozedur bei stationären oder quasistationären Bedingungen vorgenommen wird.

8. Verfahren nach einem der Ansprüche 1 bis 7, **dadurch gekennzeichnet, dass** der erste und/oder der zweite Stickoxidwert durch Integration eines vom Stickoxidsensor (8) bereitgestellten Sensorsignals erhalten werden.

**Claims**

1. Method for operating an exhaust gas purification system (1), of a motor vehicle internal combustion engine, having an SCR catalyst for the selective catalytic reduction of nitrogen oxides, wherein an ammonia-containing reductant is added to the exhaust gas at a predefinable dosing rate (D) resulting from a base value and an adaptation factor that corrects the base value, wherein from time to time a test procedure is carried out for checking and possibly adapting the adaptation factor, **characterised in that** during the test procedure a first nitrogen oxide value of the exhaust gas is compared with a second nitrogen oxide value of the exhaust gas, wherein the first nitrogen oxide value and the second nitrogen oxide value are determined with one and the same nitrogen oxide sensor (8) arranged downstream from the SCR catalyst (4), wherein the first nitrogen oxide value is determined when the dosing of the reductant is switched off and the second nitrogen oxide value is determined during dosing of the reductant at a predefinable test dosing rate ($D_P$).

2. Method according to claim 1,
**characterised in that**
with an SCR catalyst (4) that can store ammonia the first nitrogen oxide value is determined when the SCR catalyst (4) is free of stored ammonia.

3. Method according to claim 1 or 2,
**characterised in that**
the test procedure is carried out after a thermal regeneration of a particulate filter (3) assigned to the exhaust gas purification system.

4. Method according to one of claims 1 to 3,
**characterised in that**
the base value is determined by a computer model, which refers back to an estimated operating-point-dependent nitrogen oxide conversion capacity of the SCR catalyst and to an estimated operating-point-dependent nitrogen oxide raw emission of the internal combustion engine.

5. Method according to one of claims 1 to 4,
**characterised in that**
when determining the second nitrogen oxide value a test dosing rate ($D_P$) corresponding to a predefinable NOx setpoint conversion ($\eta_{soll}$) is set.

6. Method according to claim 5,
**characterised in that**
the NOx setpoint conversion ($\eta_{soll}$) is predefined in the range of from 20% and 80% of the nitrogen oxide added to the SCR catalyst (4).

7. Method according to one of claims 1 to 6,
**characterised in that**
the test procedure is carried out under stationary or quasi-stationary conditions.

8. Method according to one of claims 1 to 7,
**characterised in that**
the first and / or the second nitrogen oxide value is / are obtained by integrating a sensor signal provided by the nitrogen oxide sensor (8).

**Revendications**

1. Procédé de fonctionnement d'un purificateur des gaz d'échappement (1) présentant un système réducteur catalytique sélectif destiné à la réduction catalytique sélective d'oxydes d'azote dans un moteur à combustion interne d'un véhicule automobile, selon lequel un agent de réduction contenant de l'ammoniac dont la vitesse de dosage étant obtenue à partir d'une valeur de base et d'un facteur d'adaptation corrigeant la valeur de base, est ajouté aux gaz d'échappement, de temps en temps une procédure de vérification destinée à vérifier et si nécessaire à adapter le facteur d'adaptation, est mise en oeuvre, **caractérisé en ce que** lors de la procédure de vérification une première valeur d'oxyde d'azote des gaz d'échappement est comparée à une seconde valeur d'oxyde d'azote des gaz d'échappement, la première valeur d'oxyde d'azote et la seconde valeur d'oxyde d'azote étant déterminées au moyen d'un seul et même capteur d'oxyde d'azote (8) disposé en aval du système réducteur catalytique sélectif (4), la première valeur d'oxyde d'azote lors du dosage coupé de l'agent de réduction et la seconde valeur d'oxyde d'azote lors du dosage de l'agent de réduction étant déterminées au moyen d'une vitesse de dosage de vérification ($D_P$) prédéfinie.

2. Procédé selon la revendication 1, **caractérisé en ce que** dans un système réducteur catalytique sélectif (4) pouvant stocker l'ammoniac la première valeur d'oxyde d'azote est déterminée au moyen du système réducteur catalytique sélectif (4) dépourvu d'ammoniac stocké.

3. Procédé selon la revendication 1 ou 2, **caractérisé en ce que** la procédure de vérification est mise en oeuvre à la suite d'une régénération thermique d'un filtre à particules (3) associé au purificateur des gaz d'échappement.

4. Procédé selon l'une quelconque des revendications 1 à 3, **caractérisé en ce que** la valeur de base est déterminée par un modèle de calcul, qui recourt à un pouvoir de conversion d'oxyde d'azote en fonction de point de fonctionnement évalué et à une émission brute d'oxyde d'azote en fonction de point de fonctionnement évalué du moteur à combustion interne.

5. Procédé selon l'une quelconque des revendications 1 à 4, **caractérisé en ce que** lors de la détermination de la seconde valeur d'oxyde d'azote est réglée une vitesse de dosage de vérification ($D_P$) correspondante à une conversion théorique de NOx ($\eta_{soll}$) prédéfinie.

6. Procédé selon la revendication 5, **caractérisé en ce que** la conversion de NOx ($\eta_{soll}$) est prédéfinie dans la plage comprise entre 20 % et 80 % de l'oxyde d'azote amené au système de réduction catalytique sélective (4).

7. Procédé selon l'une quelconque des revendications 1 à 6, **caractérisé en ce que** la procédure de vérification est mise en oeuvre dans des conditions stationnaires ou quasi-stationnaires.

8. Procédé selon l'une quelconque des revendications 1 à 7, **caractérisé en ce que** la première et/ou la seconde valeur d'oxyde d'azote sont obtenues par l'intégration d'un signal de capteur fourni par le capteur d'oxyde d'azote (8).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008036884 A1

- DE 102007016478 A1